# EUROPEAN PATENT APPLICATION

(11) **EP 4 191 924 A1**
(43) Date of publication of application: **07.06.2023**
(21) Application number: 21850702.8
(22) Date of filing: 21.07.2021
(51) Int. Cl.: H04L 5/00

(54) **BEAM INDICATION METHOD AND APPARATUS, TERMINAL AND NETWORK SIDE DEVICE**

(30) Priority: 27.07.2020 CN 202010731568
(71) Applicant: Datang Mobile Communications Equipment Co., Ltd., Beijing 100085 (CN)
(72) Inventor: LI, Hui, Beijing 100085 (CN); CHEN, Runhua, Beijing 100085 (CN); GAO, Qiubin, Beijing 100085 (CN); LUO, Yajuan, Beijing 100085 (CN)
(74) Representative: dompatent von Kreisler Selting Werner - Partnerschaft von Patent- und Rechtsanwälten mbB
(86) International application number: PCT/CN2021/107568
(87) International publication number: WO 2022/022357

(57) **Abstract**

A beam indication method, a beam indication apparatus, a terminal and a network side device are provided. When the method is applied to a terminal side, the method includes: receiving by the terminal an indication message configured to indicate a first beam direction for transmitting a first object, where the first beam direction is the same as or different from a second beam direction used by the terminal for transmitting a second object, the first object and the second object are one of a channel and a reference signal, and the first beam direction is a direction indicated by a TCI state in a preconfigured TCI state set; and transmitting by the terminal the first object according to the first beam direction.

## Description

### CROSS REFERENCE OF RELATED APPLICATION

The present application claims a priority of Chinese patent application No. 202010731568.6 filed on July 27, 2020, which is incorporated herein by reference in its entirety.

### TECHNICAL FIELD

The present disclosure relates to the field of communication technologies, and in particular to a beam indication method, a beam indication apparatus, a terminal and a network side device.

### BACKGROUND

In the New Radio (NR) system, the downlink channel includes the Physical Downlink Shared Channel (PDSCH), the Physical Downlink Control Channel (PDCCH), and the uplink channel includes the Physical Uplink Shared Channel (PUSCH), and the Physical Uplink Control Channel (PUCCH).

For high-frequency transmission (FR2 frequency band in NR), due to the limited transmission range, the uplink and downlink channels are usually transmitted after beamforming to enhance coverage. The direction of the shaped beam can be determined by beam scanning of the uplink and downlink reference signals, for example, different directions of the Channel State Information Reference Signals (CSI-RS) or the Sounding Reference Signals (SRS) are used to perform the beam scanning, the direction of the reference signal with the best beam quality is selected for uplink or downlink transmission.

After the beam directions of different channels are determined, it is necessary to use signaling to indicate the beam during channel transmission, that is, beam indication. For the PUCCH channel, the base station semi-statically configures multiple beam directions for the terminal through high-level signaling SpatialRelationInfo, and instructs to activate one of them through Medium Access Control-Control Element (MAC-CE). For PUSCH, the uplink beam selected by the base station is indirectly indicated by the SpatialRelationInfo of the SRS resource indicated by the SRS Resource Indicator (SRI) field in the dynamic signaling downlink control information (DCI). For the PDCCH channel, the base station configures multiple transmission configuration indicator states (Transmission Configuration Indicator state, TCI state) for each control resource set (Control Resource Set, CORESET) through high-level signaling, and activates one of them through MAC-CE indication. For the PDSCH channel, the base station indicates a TCI state through the TCI field in the DCI signaling, indicating the beam direction of the channel.

In the related art, different channels use different beam indication signaling, and each channel performs beam indication independently. Such different channels may use respective different beam transmissions. An important scenario in practical application is that the same beam direction is used by a plurality of channels, or the beam directions used by the plurality of channels have certain correlations. For example, the PDCCH used for resource scheduling and the PDSCH for transmitting user data use the same beam direction for transmission; the uplink control channel PUCCH and the uplink data channel PUSCH also use the same beam direction. In addition, when beam reciprocity exists, the uplink channel and downlink channel may also use the same beam direction. At this time, the current independent beam indication method lacks sufficient flexibility when indicating beams.

### SUMMARY

At least one embodiment of the present disclosure provides a beam indication method, an apparatus, a terminal and a network side device, which increases the flexibility of uplink and downlink beam control.

In the first aspect, a beam indication method applied to a terminal is provided in the present disclosure, including:
receiving by the terminal an indication message configured to indicate a first beam direction for transmitting a first object, where the first beam direction is the same as or different from a second beam direction used by the terminal for transmitting a second object, the first object and the second object are one of a channel and a reference signal, and the first beam direction is a direction indicated by a TCI state in a preconfigured TCI state set; and
transmitting by the terminal the first object according to the first beam direction.

With reference to the first aspect, in some embodiments of the first aspect, the receiving the indication message configured to indicate the first beam direction for transmitting a first object includes:
receiving by the terminal a first indication message carrying a first TCI state, where the first TCI state in the first indication message is configured to indicate the first beam direction, and the first TCI state is a TCI state in the first TCI state set, where the first TCI state set is a TCI state set configured for the terminal in advance.

With reference to the first aspect, in some embodiments of the first aspect, the receiving by the terminal a second indication message carrying a second TCI state, where the second TCI state of the second indication message is configured to indicate a second beam direction for transmitting the second object; and
transmitting by the terminal the second object according to the second beam direction indicated by the second TCI state, where the second TCI state is a TCI state in the first TCI state set, and , the first TCI state is the same as or different from the second TCI state.

With reference to the first aspect, in some embodiments of the first aspect, prior to the receiving the second indication message, the method further includes:
receiving by the terminal a first configuration message, and configuring a second TCI state set of the terminal according to the first configuration message, where first quantity of TCI states are carried in the first configuration message; and
receiving by the terminal a second configuration message, and configuring the first TCI state set of the terminal according to the second configuration message, where the first TCI state set includes all or part of TCI states in the second TCI state set.

With reference to the first aspect, in some embodiments of the first aspect, where the first object is one of a physical uplink control channel PUCCH and a physical downlink control channel PDCCH, and the second object is the other one of the PUCCH and the PDCCH;
the receiving the indication message configured to indicate the first beam direction for transmitting the first object includes:
receiving by the terminal a third indication message carrying a first TCI state, where the first TCI state in the third indication message is configured to simultaneously indicate the first beam direction and the second beam direction, and the first TCI state is a TCI state in a third TCI state set, and the third TCI state set is a same TCI state set configured for the first object and the second object.

With reference to the first aspect, in some embodiments of the first aspect, prior to receiving the third indication message, the method further includes:

receiving by the terminal a third configuration message, and configuring the third TCI state set for the second object according to the third configuration message; and, receiving by the terminal a fourth configuration message, and configuring the third TCI state set for the first object according to the fourth configuration message;
or,
receiving by the terminal a fifth configuration message, and configuring the third TCI state set for the first object and the second object according to the fifth configuration message.

With reference to the first aspect, in some embodiments of the first aspect, the first object is an SRS, and the second object is a PUCCH;
the receiving the indication message configured to indicate the first beam direction for transmitting the first object includes:
receiving by the terminal a fourth indication message carrying a first TCI state, where the first TCI state in the fourth indication message is configured to indicate the first beam direction, the first TCI state is a TCI state in the fourth TCI state set configured for the first object, and the first beam direction indicated by the first TCI state is the same as or different from the second beam direction indicated by the second TCI state, and the second TCI state is a TCI state in a fifth TCI state set configured for the second object.

With reference to the first aspect, in some embodiments of the first aspect, further including:
receiving by the terminal a fifth indication message carrying the second TCI state, where the second TCI state in the fifth indication message is configured to indicate the second beam direction for transmitting the second object; and
transmitting by the terminal the second object according to the second beam direction indicated by the second TCI state.

With reference to the first aspect, in some embodiments of the first aspect, the indication message is a Medium Access Control-Control Element MAC-CE signaling, where indication information configured to activate the first TCI state is carried in the MAC-CE signaling; or,
the indication message is a downlink control information DCI signaling configured to schedule transmission of the first object or activate the first object, where the indication information of the first TCI state is carried in the DCI signaling.

With reference to the first aspect, in some embodiments of the first aspect, the receiving the indication message configured to indicate the first beam direction for transmitting the first object includes:
receiving by the terminal a sixth indication message, where indication information indicating that the second beam direction is used as the first beam direction is carried in the sixth indication message, and the second beam direction is a direction indicated by a TCI state in a TCI state set configured in advance for the second object.

With reference to the first aspect, in some embodiments of the first aspect, the second object is PDCCH, and the first object is at least one of PDSCH, CSI-RS, PUCCH, PUSCH or SRS; and
the second beam direction is a beam direction used for a latest transmission of the second object.

With reference to the first aspect, in some embodiments of the first aspect, the sixth indication message is a DCI signaling configured to schedule transmission of the first object or a MAC-CE signaling configured to activate the first object.

With reference to the first aspect, in some embodiments of the first aspect, when the first object is PDSCH, the sixth indication message is the DCI signaling;
when the first object is CSI-RS, the sixth indication message is the DCI signaling or the MAC-CE signaling;
when the first object is PUCCH, the sixth indication message is the MAC-CE signaling;
when the first object is PUSCH, the sixth indication message is the DCI signaling; and
when the first object is SRS, the sixth indication message is the DCI signaling or the MAC-CE signaling.

In the second aspect, a beam indication method applied to a network side device is provided in the present disclosure, including:
generating an indication message configured to indicate a first beam direction for transmitting a first object, where the first beam direction is the same as or different from a second beam direction used by a terminal for transmitting a second object, the first object and the second object are one of a channel and a reference signal, and the first beam direction is a direction indicated by a TCI state in a preconfigured TCI state set; and
sending the indication message to the terminal.

With reference to the second aspect, in some embodiments of the second aspect, the generating the indication message includes:
generating a first indication message carrying a first TCI state, where the first TCI state in the first indication message is configured to indicate the first beam direction, and the first TCI state is a TCI state in the first TCI state set, where the first TCI state set is a TCI state set configured for the terminal in advance.

With reference to the second aspect, in some embodiments of the second aspect, prior to the sending the first indication message, the method further includes:
sending a second indication message carrying a second TCI state, where the second indication message is configured to indicate a second beam direction for transmitting the second object, where the second TCI state is a TCI state in the first TCI state set, and the first TCI state is the same as or different from the second TCI state.

With reference to the second aspect, in some embodiments of the second aspect, prior to the sending the second indication message, the method further includes:
sending a first configuration message, where the first configuration message is configured to configure a second TCI state set for the terminal, and first quantity of TCI states are carried in the first configuration message; and
sending a second configuration message, where the second configuration message is configured to configure the first TCI state set for the terminal, and the first TCI state set includes all or part of TCI states in the second TCI state set.

With reference to the second aspect, in some embodiments of the second aspect, the first object is one of a physical uplink control channel PUCCH and a physical downlink control channel PDCCH, and the second object is the other one of the PUCCH and the PDCCH;
the generating the indication message includes:
generating a third indication message carrying a first TCI state, where the first TCI state in the third indication message is configured to simultaneously indicate the first beam direction and the second beam direction, and the first TCI state is a TCI state in a third TCI state set, and the third TCI state set is a same TCI state set configured for the first object and the second object.

With reference to the second aspect, in some embodiments of the second aspect, sending a third configuration message to the terminal, where the third configuration message is configured to configure a third TCI state set for the second object, a plurality of TCI states are carried in the third configuration message; and, sending a fourth configuration message to the terminal, where the fourth configuration message is configured to configure the third TCI state set for the first object;
or,
sending a fifth configuration message to the terminal, where the fifth configuration message is configured to configure the third TCI state set for the first object and the second obj ect.

With reference to the second aspect, in some embodiments of the second aspect, the first object is an SRS, and the second object is a PUCCH;
the generating the indication message includes:
generating a fourth indication message carrying a first TCI state, where the first TCI state in the fourth indication message is configured to indicate the first beam direction, the first TCI state is a TCI state in the fourth TCI state set configured for the first object, and the first beam direction indicated by the first TCI state is the same as or different from the second beam direction indicated by the second TCI state, and the second TCI state is a TCI state in a fifth TCI state set configured for the second object.

With reference to the second aspect, in some embodiments of the second aspect, further including:
sending a fifth indication message carrying the second TCI state to the terminal, where the second TCI state in the fifth indication message is configured to indicate the second beam direction for transmitting the second object.

With reference to the second aspect, in some embodiments of the second aspect, the indication message is a Medium Access Control-Control Element MAC-CE signaling, where indication information configured to activate the first TCI state is carried in the MAC-CE signaling; or,
the indication message is a downlink control information DCI signaling configured to schedule transmission of the first object or activate the first object, where the indication information of the first TCI state is carried in the DCI signaling.

With reference to the second aspect, in some embodiments of the second aspect, the generating the indication message includes:
generating a sixth indication message carrying the second beam direction used as the first beam direction, and the second beam direction is a direction indicated by a TCI state in a TCI state set configured in advance for the second object.

With reference to the second aspect, in some embodiments of the second aspect, the second object is PDCCH, and the first object is at least one of PDSCH, CSI-RS, PUCCH, PUSCH or SRS; and
the second beam direction is a beam direction used for a latest transmission of the second object.

With reference to the second aspect, in some embodiments of the second aspect, the indication message is a DCI signaling configured to schedule transmission of the first object or a MAC-CE signaling configured to activate the first object.

With reference to the second aspect, in some embodiments of the second aspect, when the first object is PDSCH, the indication message is the DCI signaling;
when the first object is CSI-RS, the indication message is the DCI signaling or the MAC-CE signaling;
when the first object is PUCCH, the indication message is the MAC-CE signaling;
when the first object is PUSCH, the sixth indication message is the DCI signaling; and
when the first object is SRS, the indication message is the DCI signaling or the MAC-CE signaling.

In a third aspect, a beam indication apparatus is provided in the present disclosure, applied to a terminal and including:
a receiving module, configured to receive an indication message configured to indicate a first beam direction for transmitting a first object, where the first beam direction is the same as or different from a second beam direction used by the terminal for transmitting a second object, the first object and the second object are one of a channel and a reference signal, and the first beam direction is a direction indicated by a TCI state in a preconfigured TCI state set; and
a transmission control module, configured to transmit the first object according to the first beam direction.

In a fourth aspect, a terminal is provided in the present disclosure, including: a memory, a processor, a transceiver, and a program stored in the memory and executable on the processor; when the processor executes the program, following steps are implemented:
receiving an indication message configured to indicate a first beam direction for transmitting a first object, where the first beam direction is the same as or different from a second beam direction used by the terminal for transmitting a second object, the first object and the second object are one of a channel and a reference signal, and the first beam direction is a direction indicated by a TCI state in a preconfigured TCI state set; and
transmitting the first object according to the first beam direction.

In the fifth aspect, another beam indication apparatus is provided in the present disclosure, applied to a network side device, including:
a message generating module, configured to generate an indication message configured to indicate a first beam direction for transmitting a first object, where the first beam direction is the same as or different from a second beam direction used by the terminal for transmitting a second object, the first object and the second object are one of a channel and a reference signal, and the first beam direction is a direction indicated by a TCI state in a preconfigured TCI state set; and
a message sending module, configured to send the indication message to the terminal.

In a sixth aspect, a network side device is provided in the present disclosure, including: a memory, a processor, a transceiver, and a program stored in the memory and executable on the processor; when the processor executes the program, following steps are implemented:
generating an indication message configured to indicate a first beam direction for transmitting a first object, where the first beam direction is the same as or different from a second beam direction used by the terminal for transmitting a second object, the first object and the second object are one of a channel and a reference signal, and the first beam direction is a direction indicated by a TCI state in a preconfigured TCI state set; and
sending the indication message to the terminal.

In a seventh aspect, a computer storage medium is provided in the present disclosure, including instructions, when the instructions are run in a computer, the computer is enabled to perform the above-mentioned methods.

The beneficial effect of the embodiments in the present disclosure is that:

the embodiments of the present disclosure can realize flexible beam direction indication, and support different channels/reference signals to use the same or different beams. In addition, in the embodiments of the present disclosure, the beam direction indication can be performed through MAC-CE or dynamic signaling, which can reduce the time delay and signaling overhead of the beam indication.

### BRIEF DESCRIPTION OF THE DRAWINGS

Various other advantages and benefits will become apparent to those ordinarily skilled in the art upon reading the following detailed description of optional embodiments. The drawings are for the purpose of illustrating optional embodiments only and are not considered as limiting of the present disclosure. Also, the same components are denoted by using the same reference numerals throughout the drawings. In the drawing:
FIG. 1 is a schematic view of a wireless communication system suitable for an embodiment of the present disclosure;
FIG. 2 is a flowchart of a beam indication method provided by an embodiment of the present disclosure;
FIG. 3 is another flowchart of the beam indication method provided by an embodiment of the present disclosure;
FIG. 4 is a structure view of a beam indication apparatus provided by an embodiment of the present disclosure;
FIG. 5 is a structural view of a terminal provided by an embodiment of the present disclosure;
FIG. 6 is another structural view of the beam indication apparatus by an embodiment of the present disclosure; and
FIG. 7 is a structural view of a network side device by an embodiment of the present disclosure;

### DETAILED DESCRIPTION

Exemplary embodiments of the present disclosure will be described in more detail below with reference to the drawings. Although exemplary embodiments of the present disclosure are shown in the drawings, it should be understood that the present application may be embodied in various forms and should not be limited to the embodiments set forth herein. Rather, these embodiments are provided so that the present disclosure can be more thoroughly understood, and the scope of the present disclosure can be fully conveyed to those skilled in the art.

The terms "first", "second" and the like in the specification and claims of the present disclosure are used to distinguish similar objects, and are not necessarily used to describe a specific order or sequence. It is to be understood that the data so used are interchangeable under appropriate circumstances such that the embodiments of the present disclosure described herein, for example, can be implemented in sequence other than those illustrated or described herein. Furthermore, the terms "comprising" and "having", as well as any variations thereof, are intended to cover a non-exclusive inclusion, for example, a process, method, system, product or device comprising a sequence of steps or elements are not necessarily limited to those steps or units explicitly listed, but may include other steps or units not explicitly listed or inherent to the process, method, product or device. "And/or" in the specification and claims means at least one of the connected objects.

The techniques described herein are not limited to Long Time Evolution (LTE), LTE-Advanced (LTE-A) systems, and 5G NR systems, and can also be used in other various wireless communication systems, such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and new communication systems that will appear in the future. The terms "system" and "network" are often used interchangeably. A CDMA system may implement radio technologies such as CDMA2000, Universal Terrestrial Radio Access (UTRA). UTRA includes Wideband CDMA (Wideband Code Division Multiple Access, WCDMA) and other CDMA variants. A TDMA system can implement a radio technology such as Global System for Mobile Communication (GSM). The OFDMA system can implement radio technology such as UltraMobile Broadband (UMB), Evolution-UTRA (Evolution-UTRA, E-UTRA), IEEE 802.21 (Wi-Fi), IEEE 802.16 (WiMAX), IEEE 802.20, Flash-OFDM. UTRA and E-UTRA are parts of the Universal Mobile Telecommunications System (UMTS). LTE and LTE-Advanced (such as LTE-A) are new UMTS versions that use E-UTRA. UTRA, E-UTRA, UMTS, LTE, LTE-A and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. However, the following description describes NR systems for example purposes, and NR terminology is used in much of the following description, although the techniques are applicable to applications other than NR system applications as well.

The following description provides examples and does not limit the scope, applicability or configuration set forth in the claims. Changes may be made in the function and arrangement of elements discussed without departing from the spirit and scope of the present disclosure. Various examples may omit, substitute, or add various procedures or components as appropriate. For example, the methods described may be performed in an order different from that described, and various steps may be added, omitted, or combined. Additionally, features described with reference to certain examples may be combined in other examples.

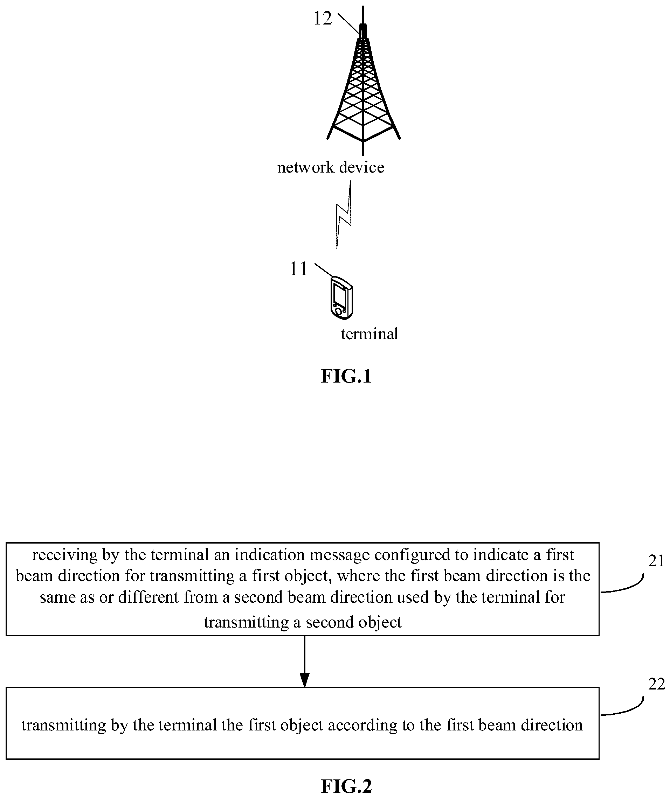

Refer to FIG. 1, FIG. 1 shows a block diagram of a wireless communication system that is applicable to an embodiment of the present disclosure. The wireless communication system includes a terminal 11 and a network device 12, wherein the terminal 11 may also be called a user terminal or user equipment (UE, User Equipment), and the terminal 11 may be a mobile phone, a tablet personal computer (Tablet Personal Computer), a laptop computer (Laptop Computer), a personal digital assistant (Personal Digital Assistant, PDA), mobile Internet device (Mobile Internet Device, MID), wearable device (Wearable Device) or vehicle-mounted device and other terminal-side devices. It should be noted that the specific types of terminals 11 are not limited in the embodiments of the present disclosure. The network device 12 may be a base station and/or a core network element, where the above-mentioned base station may be a base station of 5G and later versions (for example: gNB, 5G NR NB, etc.), or a base station in other communication systems (for example: eNB, WLAN access point, or other access point, etc.), where a base station may be referred to as Node B, evolved Node B, access point, base transceiver station (Base Transceiver Station, BTS), radio base station, radio transceiver, Basic Service Set (BSS), Extended Service Set (ESS), Node B, Evolved Node B (eNB), Home Node B, Home Evolved Node B, WLAN access point, WiFi node or any other suitable term in the field, as long as the same technical effect is achieved, the base station is not limited to specific technical terms. It should be noted that, in the embodiment of the present disclosure, only the base station in the NR system is taken as an example, but the specific type of the base station is not limited.

The base station may communicate with a terminal 11 under the control of a base station controller, which may be part of a core network or certain base stations in various examples. Some base stations can communicate control information or user data with the core network through the backhaul. In some examples, some of these base stations may communicate with each other directly or indirectly via a backhaul link, which may be a wired or wireless communication link. A wireless communication system may support operation on multiple carriers (waveform signals with different frequencies). A multi-carrier transmitter is capable of transmitting modulated signals on these multiple carriers simultaneously. For example, each communication link may be a multi-carrier signal modulated according to various radio technologies. Each modulated signal may be sent on a different carrier and may carry control information (eg, reference signal, control channel, etc.), overhead information, data, and so on.

A base station may communicate wirelessly with terminals 11 via one or more access point antennas. Each base station may provide communication coverage for an each responding coverage area. The coverage area of an access point may be divided into sectors that constitute only a portion of the coverage area. A wireless communication system may include different types of base stations (eg, macro base stations, micro base stations, or pico base stations). The base stations may also utilize different radio technologies, such as cellular or WLAN radio access technologies. Base stations may be associated with the same or different access networks or operator deployments. The coverage areas of different base stations (including the coverage area of the same or different types of base stations, the coverage area of the same or different radio technology, or the coverage area of the same or different access network) may be overlapped.

Communication links in a wireless communication system may include uplinks for carrying uplink (Uplink, UL) transmissions (eg, from terminal 11 to network device 12), or downlinks for carrying downlink (Downlink, DL) transmissions (eg, from network device 12 to terminal 11). UL transmissions can also be called reverse link transmissions, and DL transmissions can also be called forward link transmissions. Downlink transmissions may be performed by using licensed frequency bands, unlicensed frequency bands, or both. Similarly, uplink transmissions may be performed by using licensed frequency bands, unlicensed frequency bands, or both.

The embodiments of the present disclosure provide a beam indication method, as shown in FIG. 2, when the method is applied to the terminal side, the method includes:

Step 21, receiving by the terminal an indication message configured to indicate a first beam direction for transmitting a first object, where the first beam direction is the same as or different from a second beam direction used by the terminal for transmitting a second object, the first object and the second object are one of a channel and a reference signal, and the first beam direction is a direction indicated by a TCI state in a preconfigured TCI state set.

Here, the embodiments of the present disclosure indicate the first beam direction of the first object in the indication message sent to the terminal, and the beam direction of the first object (for ease of description, referred as the first beam direction) and the beam direction of the second object (for ease of description, referred as the second beam direction) may be the same or different. The first object may be one of a channel and a reference signal, and similarly, the second object may also be one of a channel and a reference signal. The first object and the second object are different channels/reference signals respectively. The channel may include one or more of PDSCH, PDCCH, PUSCH and PUCCH, and the reference signal may include one or more of CSI-RS and SRS.

In addition, the specific method in which the indication message indicates the beam may be performed by one or more of TCI status, quasi co-location (Quasi co-location, QCL) parameter, spatial relationship information (SpatialRelationInfo), index of uplink reference signal, index of downlink reference signal, index of synchronization signal, uplink channel and downlink channel, wherein when the index of the uplink reference signal, the index of the downlink reference signal, the index of the synchronization signal, the uplink channel or the downlink channel are used to indicate the beam direction, the indicated beam direction is: the latest beam direction used by the uplink reference signal, downlink reference signal, synchronization signal, uplink channel or downlink channel.

Step 22, transmitting by the terminal the first object according to the first beam direction.

Here, in the embodiments of the present disclosure, in step 22, the first beam direction indicated by the indication message is used to transmit the first object.

It should be noted that the transmission described in the embodiments of the present disclosure includes sending and/or receiving. For example, when the first beam direction is a direction of sending beam, when the first object is sent, sending may be performed in a direction of the sending beam; when the first object is received, the first object may be received in a direction of the sending beam. Similarly, when the first beam direction is a direction of receiving beam, when the first object is sent, sending may be performed in a direction of the receiving beam; when the first object is received, receiving may be performed in a direction of the receiving beam.

Through the above steps, the embodiments of the present disclosure can use an indication message to indicate the first beam direction of the first object, and the first beam direction can be the same as or different from the second beam direction of the second object, therefore, when indicating the beam direction, it is possible to indicate the beam direction with an association relationship, flexible beam indication can be realized. In addition, the embodiments of the present disclosure can also send the above-mentioned indication message when the beam needs to be changed, so as to realize dynamic beam indication and increase the flexibility of uplink and downlink beam control.

Multiple implementation methods of the above step 21 are provided below.

1) As an implementation method, in the above step 21, the terminal receives a first indication message carrying a first TCI state, where the first TCI state in the first indication message is configured to indicate the first beam direction, the first TCI state is a TCI state in a first TCI state set, and the first TCI state set is a TCI state set configured for the terminal in advance.

In this implementation method, the first object and the second object may be any one of a channel and a reference signal, where the channel includes PDCCH, PUCCH, PDSCH, and PUSCH, and the reference signal includes SRS and CSI-RS.

Before the above step 21, the terminal receives the second indication message carrying the second TCI state sent by the network, where the second indication message is configured to indicate the second beam direction for transmitting the second object; then, the second object is transmitted according to the second beam direction indicated by the second TCI state, where the second TCI state is also a TCI state in the first TCI state set, and the first TCI state is the same as or different from the second TCI state.

In this way, the network can configure the same TCI state set (such as the first TCI state set above) for the terminals, and then respectively use a TCI state in the set to indicate beam directions thereof for different objects, where the beam directions of different objects may be same or different. When the beam directions of the two objects are different, different TCI states may be used to indicate the corresponding beam directions; when the beam directions of the two objects are the same, the same TCI state may be used to indicate the corresponding beam directions.

In the above-mentioned implementation method, the network preconfigures the first TCI state set for the terminal, and the set includes a plurality of TCI states. In this way, the subsequent network can indicate a specific beam direction for the terminal by sending an indication message carrying the TCI state.

As a configuration method of the first TCI state set, the network may send a configuration message to the terminal; the terminal receives the configuration message above, and configures the first TCI state set including a plurality of TCI states according to the configuration message above. The configuration message may specifically be an RRC signaling message, which carries a plurality of TCI states.

As another configuration method of the first TCI state set, the network may first configure a second TCI state set including more TCI states, and then select part or all of the TCI states from the above-mentioned second TCI state set as required to be configured as the first TCI state set. At this time, the terminal receives a first configuration message, configures a second TCI state set according to the first configuration message, and first quantity of TCI states are carried in the first configuration message; then, the terminal receives a second configuration message, configures the first TCI state set of the terminal according to the second configuration message, where the first TCI state set includes all or part of the TCI states in the second TCI state set. The first configuration message may be an RRC signaling message, and the second configuration message may be a MAC-CE.

2) As another implementation method, in the above step 21, the terminal receives a third indication message carrying the first TCI state, where the first TCI state in the third indication message is configured to simultaneously indicate the first beam direction and the second beam direction, the first TCI state is a TCI state in a third TCI state set, and the third TCI state set is a same TCI state set configured for the first object and the second object. At this time, the first beam direction is the same as the second beam direction.

In this implementation method, the first object is one of the PUCCH and the PDCCH, and the second object is the other one of the PUCCH and the PDCCH.

In this implementation method, the network configures the same TCI state set for the first object and the second object, that is, the above-mentioned third TCI state set, and uses a TCI state carried in an indication message (third indication message) to indicate the same beam direction of different objects. This implementation method is particularly applicable between uplink and downlink objects, for example, the first object is the PUCCH, and the second object is the PDCCH.

Before the above step 21, the network may respectively configure the same TCI state set for the first object and the second object through a configuration message. For example, the terminal receives a third configuration message, configures the third TCI state set for the second object according to the TCI state carried in the third configuration message; and, the terminal receives a fourth configuration message, configures the same third TCI state set for the first object according to the fourth configuration message, thereby configuring the third TCI state set for both the first and second objects. Certainly, the configuration may also be performed through one configuration message, for example, the terminal receives a fifth configuration message, and configures the third TCI state set for the first object and the second object according to the fifth configuration message.

3) As still another implementation method, in the above step 21, the terminal receives a fourth indication message carrying the first TCI state, where the first TCI state in the fourth indication message is configured to indicate the first beam direction, the first TCI state is a TCI state in the fourth TCI state set configured for the first object, and the first beam direction indicated by the first TCI state is the same as or different from the second beam direction indicated by the second TCI state, and the second TCI state is a TCI state in the fifth TCI state set configured for the second object.

In this implementation method, the first object is the SRS, and the second object is the PUCCH.

In this implementation method, the network configures corresponding TCI state sets for the first object and the second object respectively, that is, the above-mentioned fourth TCI state set and fifth TCI state set, where the TCI states in these two sets can be all the same, partly the same or completely different.

In addition, the terminal may also receive a fifth indication message carrying a second TCI state sent by the network, where the second TCI state in the fifth indication message is configured to indicate the second beam direction for transmitting the second object, the second TCI state is a TCI state in the fifth TCI state set configured for the second object; the terminal transmits the second object according to the second beam direction indicated by the second TCI state, where the second beam direction is the same as or different from the first beam direction. When the second beam direction is the same as the first beam direction, the fourth and fifth TCI state sets include the same TCI state to indicate the same beam direction.

Similarly, prior to the receiving the fourth indication message, the terminal may receive a configuration message sent by the network to configure the fourth TCI state set. Prior to the receiving the fifth indication message, the terminal may receive a configuration message sent by the network to configure the fifth TCI state set. Of course, the network can also configure the fourth and fifth TCI state sets above through the same configuration message.

In the above implementation methods 1 to 3, the instruction message in the above step 21 may specifically be a Medium Access Control-Control Element (MAC-CE) signaling, and indication information configured to activate the corresponding TCI state (such as the first TCI status) is carried in the MAC-CE signaling. Or, the indication message in the above step 21 may specifically be a downlink control information (DCI) signaling configured to schedule transmission of the first object or activate the first object, where indication information of the first TCI state is carried in the DCI signaling.

4) As still another implementation method, in the above step 21, the terminal receives a sixth indication message, and indication information indicating that the second beam direction is used as the first beam direction is carried in the sixth indication message. Through the sixth indication message, the beam direction of the second object is directly configured as the beam direction of the first object. The second beam direction is a direction indicated by a TCI state in the TCI state set preconfigured for the second object. Since the first beam direction is the same as the second beam direction, the first beam direction is also the direction indicated by a TCI state in the preconfigured TCI state set.

For example, the second object is PDCCH, and the first object is at least one of PDSCH, CSI-RS, PUCCH, PUSCH or SRS. In addition, the second beam direction may be the beam direction used for a latest transmission of the second object.

At this time, the sixth indication message may specifically be a DCI signaling configured to schedule transmission of the first object or a MAC-CE signaling configured to activate the first object. More specifically:
when the first object is PDSCH, the sixth indication message is the DCI signaling;
when the first object is CSI-RS, the sixth indication message is the DCI signaling or the MAC-CE signaling;
when the first object is PUCCH, the sixth indication message is the MAC-CE signaling;
when the first object is PUSCH, the sixth indication message is the DCI signaling; and
when the first object is SRS, the sixth indication message is the DCI signaling or the MAC-CE signaling.

Through the various implementation methods provided above, the embodiments of the present disclosure can realize flexible beam direction indication, and support different channels/reference signals to use the same or different beams. In addition, in the embodiments of the present disclosure, the beam direction can be indicated through MAC-CE or dynamic signaling, which can reduce the time delay and signaling overhead of the beam indication.

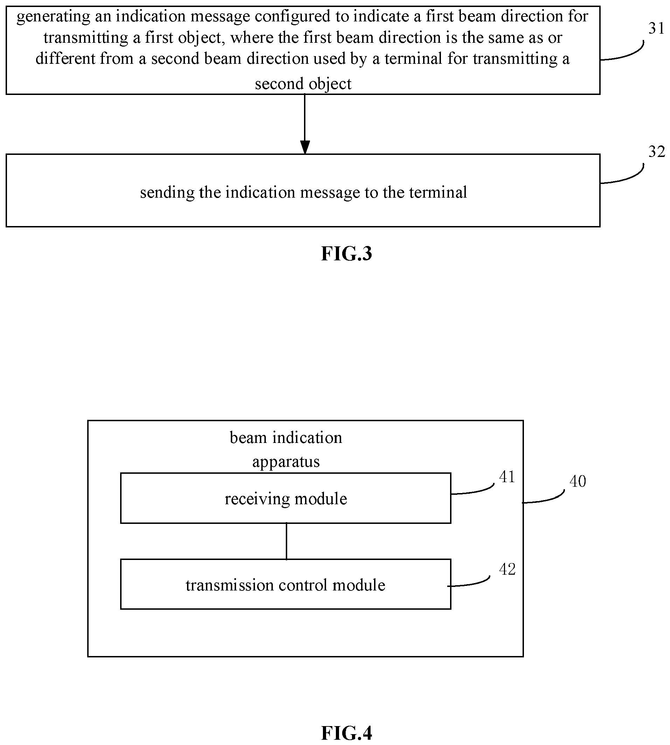

The above describes at least one implementation method of the beam indication method in the present disclosure from the terminal side. Refer to FIG. 3 below, the beam indication method provided by the embodiments of the present disclosure, when applied to a network side device, such as a base station, includes:

Step 31, generating an indication message configured to indicate a first beam direction for transmitting a first object, where the first beam direction is the same as or different from a second beam direction used by a terminal for transmitting a second object, the first object and the second object are one of a channel and a reference signal, and the first beam direction is a direction indicated by a TCI state in a preconfigured TCI state set; and

Step 32, sending the indication message to the terminal.

Here, corresponding to the above implementation method 1, in the above step 31, the network side device may generate a first indication message carrying the first TCI state, where the first TCI state in the first indication message is configured to indicate the first beam direction, the first TCI state is a TCI state in a first TCI state set, and the first TCI state set is a TCI state set configured for the terminal in advance.

In addition, prior to the sending the first indication message, the network side device may also send a second indication message carrying a second TCI state, where the second indication message is configured to indicate a second beam direction for transmitting the second object, where the second TCI state is a TCI state in the first TCI state set, and the first TCI state is the same as or different from the second TCI state.

In addition, prior to the sending the second indication message, the network side device may also send a first configuration message, where the first configuration message is configured to configure the second TCI state set for the terminal, and first quantity of TCI states are carried in the first configuration message; and send a second configuration message to configure the first TCI state set for the terminal, where second quantity of TCI states are carried in the second configuration message, where the second quantity is less than or equal to the first quantity. Through the above configuration message, the first TCI state set can be configured for the terminal. Specifically, the first TCI state set includes all or part of TCI states in the second TCI state set.

Here, corresponding to the aforementioned implementation method 2, in the above step 31, the network side device may generate a third indication message carrying the first TCI state, where the first TCI state in the third indication message is configured to simultaneously indicate the first beam direction and the second beam direction, the first TCI state is a TCI state in a third TCI state set, and the third TCI state set is a same TCI state set configured for the first object and the second object.

Specifically, the first object may be a PUCCH, and the second object may be a PDCCH.

In addition, the network side may also send a third configuration message to the terminal, where the third configuration message is configured to configure a third TCI state set for the second object, where a plurality of TCI states are carried in the third configuration message; and, send a fourth configuration message to the terminal, where the fourth configuration message is configured to configure the third TCI state set for the first object. Or, the network side may also send a fifth configuration message to the terminal, where the fifth configuration message is configured to configure the third TCI state set for the first object and the second object.

Here, corresponding to the aforementioned implementation method 3, in the above step 31, the network side device may generate a fourth indication message carrying the first TCI state, wherein the first TCI state in the fourth indication message is configured to indicate the first beam direction, the first TCI state is a TCI state in the fourth TCI state set configured for the first object, and the first beam direction indicated by the first TCI state is the same as or different from the second beam direction indicated by the second TCI state, and the second TCI state is a TCI state in a fifth TCI state set configured for the second object.

In addition, the network side device may also send a fifth indication message carrying the second TCI state to the terminal, where the second TCI state in the fifth indication message is configured to indicate the second beam direction for transmitting the second object.

Similarly, the above-mentioned first to fifth indication messages may specifically be a MAC-CE signaling, where indication information configured to activate the first TCI state is carried in the MAC-CE signaling; or, the above-mentioned first to fifth indication messages may specifically be a DCI signaling, where indication information of the first TCI state is carried in the DCI signaling.

Here, corresponding to the foregoing implementation method 4, in the above step 31, the network side device may generate indication information carrying the second beam direction as the first beam direction.

Specifically, the second object is a PDCCH, and the first object is at least one of PDSCH, CSI-RS, PUCCH, PUSCH, or SRS. The second beam direction is the beam direction used for a latest transmission of the second object. The indication message is a DCI signaling configured to schedule transmission of the first object or a MAC-CE signaling configured to activate the first object.

For example, when the first object is a PDSCH, the indication message is the DCI signaling;
when the first object is a CSI-RS, the indication message is the DCI signaling or the MAC-CE signaling;
when the first object is a PUCCH, the indication message is the MAC-CE signaling;
when the first object is a PUSCH, the sixth indication message is a DCI signaling; and
when the first object is an SRS, the indication message is the DCI signaling or the MAC-CE signaling.

The implementation of the beam indication method in the embodiments of the present disclosure on both the terminal and the network side is described below. Several examples of applying the beam indication method in the embodiments of the present disclosure are further provided below. In the following examples, the first beam direction and the second beam direction are mostly the same as an example for description.

### Example 1:

The base station configures the second TCI state set for the terminal through RRC signaling, which includes M=128 TCI states, expressed as: C1={TCI_O,TCI_1,...,TCI_127}. The base station instructs the terminal through the first MAC-CE signaling that the first TCI state set is C2={tci_0,tci_1,...,tci_63}, where tci_i∈C1, i=0,1,...,63. Here, the first TCI state set includes N=64 TCI states, and each state is selected from the second TCI state set. Herein, the TCI states indicated respectively by tci_i and TCI_i may be the same or different.

When the base station transmits the PDCCH channel, it activates a TCI state from C2 through the second MAC-CE signaling and informs the terminal, such as activating tci_5. In this way, the PDCCH channel will use the beam direction corresponding to tci_5 for transmission, and the terminal (UE) will use the corresponding receiving beam for receiving; when the terminal sends the PUCCH channel, the base station activates the same TCI state from C2 through the third MAC-CE signaling, that is, activating tci_5. In this way, the terminal will use the receiving beam direction corresponding to tci_5 as the sending beam direction to perform the transmission of PUCCH channel. When the terminal transmits the PUSCH channel, the base station uses the first DCI signaling to schedule the transmission of PUSCH channel. The first DCI signaling includes a TCI indication field, which refers to the beam direction used by the scheduled PUSCH channel. Here, the TCI indication field may indicate tci_5. In this way, the PUSCH also uses the receiving beam direction corresponding to tci_5 as the sending beam direction for transmission. Therefore, the same TCI state selected from the first TCI state set is respectively configured through different channels, so that the same sending beam is used by a plurality of channels.

### Example 2:

The base station configures the third TCI state set for the PDCCH channel through RRC signaling, expressed as C3={tci_0,tci_1,...,tci_63}. That is, it contains 64 TCI states. At the same time, the base station configures the same TCI state set for the PUCCH channel through RRC signaling, that is, {tci_0, tci_1, ... , tci_63 }. The base station side activates tci_6 in C3 as a transmission beam of the PDCCH through MAC-CE signaling. In the system, the MAC-CE signaling is predefined to activate the transmission beam of the PUCCH at the same time, so that the beam direction corresponding to tci_6 is also used for the transmission of the PUCCH.

### Example 3:

The base station configures 8 TCI states for each SRS resource through RRC signaling, denoted as {tci_0, tci_1, ... , tci_7}. At the same time, the base station configures 8 TCI states for the PUCCH channel, denoted as {TCI_0, TCI_1, ... , TCI_7}. The base station activates TCI_6 of the PUCCH channel through the first MAC-CE signaling, and instructs the terminal to use the beam corresponding to TCI_6 to send the PUCCH channel. Further, the base station activates tci_1 of the SRS resource through the second MAC-CE signaling, and instructs the terminal to use the beam corresponding to tci_1 to send the SRS. Or, the base station triggers the sending of the SRS resource through DCI signaling, and the DCI signaling includes a TCI indication field, indicating that one of the 8 TCI states configured from the base station is selected as the sending beam of the SRS resource. For example, if the DCI signaling indicates tci_1, the terminal uses the beam corresponding to tci_1 to send the SRS. If tci_1 and TCI_6 configured by the RRC signaling correspond to the same beam direction, it is possible to support the use of the same sending beam for the SRS resource and the PUCCH channel.

### Example 4:

The system predefines default beam indication signaling, and the signaling instructs the terminal to ignore the beam-related information configured by the RRC, and to use the default beam to perform the transmission of channel or reference signal. The default beam is the beam of the latest PDCCH transmission.

For the PDSCH channel, DCI signaling may be used to indicate whether to use a default beam. One way is to add a default beam indication field in the scheduled DCI signaling. If the indication field is in an ON state, it means that the default beam is used for this transmission.

For the CSI-RS reference signal, MAC-CE signaling or DCI signaling may be used to indicate whether to use the default beam. For example, for aperiodic CSI-RS, in the DCI signaling triggered by it, a default beam indication field is added for indication; for semi-persistent CSI-RS, the MAC-CE signaling of the CSI-RS is activated to indicate whether to use the default beam; and for periodic CSI-RS, new MAC-CE signaling can also be used to indicate whether to use the default beam.

For the PUCCH channel, the default beam indication signaling may be indicated by MAC-CE. When the default beam is not used, the MAC-CE signaling can activate a TCI state; otherwise, the signaling indicates that the default beam is used.

For the PUSCH channel, the default beam may be indicated by DCI. One way may be to add a default beam indication field in the DCI for scheduling the PUSCH channel.

For the SRS reference signal, MAC-CE or DCI signaling can be used to perform the indication. The specific method thereof is similar to that of the CSI-RS, and will not be repeated here.

Through the above configurations of respective channels, all channels and reference signals can be transmitted by using the same beam as the PDCCH.

Various methods in the embodiments of the present disclosure are introduced above. A device for implementing the above-mentioned method will be further provided below.

Refer to FIG. 4, the embodiments of the present disclosure provide a beam indication apparatus 40, which can be applied to a terminal, as shown in FIG. 4, the beam indication method 40 includes:
a receiving module 41, configured to receive an indication message configured to indicate a first beam direction for transmitting a first object, where the first beam direction is the same as or different from a second beam direction used by the terminal for transmitting a second object, the first object and the second object are one of a channel and a reference signal, and the first beam direction is a direction indicated by a TCI state in a preconfigured TCI state set; and
a transmission control module 42, configured to transmit the first object according to the first beam direction.

Optionally, the receiving module 41 is further configured to receive a first indication message carrying a first TCI state, where the first TCI state in the first indication message is configured to indicate the first beam direction, the first TCI state is a TCI state in a first TCI state set, and the first TCI state set is a TCI state set configured for the terminal in advance.

Optionally, the receiving module 41 is further configured to receive a second indication message carrying a second TCI state prior to the receiving the first indication message, where the second TCI state of the second indication message is configured to indicate the second beam direction for transmitting the second object;

The transmission control module 42 is further configured to transmit the second object according to the second beam direction indicated by the second TCI state, where the second TCI state is a TCI state in the first TCI state set, and the first TCI state is the same as or different from the second TCI state.

Optionally, the receiving module 41 is further configured to receive a first configuration message prior to the receiving the second indication message, and configure the second TCI state set of the terminal according to the first configuration message, where first quantity of TCI states are carried in the first configuration message; and receive a second configuration message, and configure the first TCI state set of the terminal according to the second configuration message, where the first TCI state set includes all or part of TCI states in the second TCI state set.

Optionally, the first object is one of the physical uplink control channel PUCCH and the physical downlink control channel PDCCH, and the second object is the other one of the PUCCH and the PDCCH; the receiving module 41 is also configured to receive a third indication message carrying a first TCI state, where the first TCI state in the third indication message is configured to simultaneously indicate the first beam direction and the second beam direction, and the first TCI state is a TCI state in the third TCI state set, and the third TCI state set is the same TCI state set configured for the first object and the second object.

Optionally, the receiving module 41 is further configured to receive a third configuration message, and configure the third TCI state set for the second object according to the third configuration message; and, the terminal receives a fourth configuration message, and configures the third TCI state set for the first object according to the fourth configuration message; or, receives a fifth configuration message, and configures the third TCI state set for the first object and the second object according to the fifth configuration message.

Optionally, the first object is the SRS, and the second object is the PUCCH; the receiving module 41 is further configured to receive a fourth indication message carrying the first TCI state, where the first TCI state in the fourth indication message is configured to indicate the first beam direction, and the first TCI state is a TCI state in the fourth TCI state set configured for the first object, and , the first beam direction indicated by the first TCI state is the same as or different from the second beam direction indicated by the second TCI state, and the second TCI state is a TCI state in the fifth TCI state set configured for the second object.

Optionally, the receiving module 41 is further configured to receive a fifth indication message carrying a second TCI state, where the second TCI state in the fifth indication message is configured to indicate the second beam direction for transmitting the second object; and transmit the second object according to the second beam direction indicated by the second TCI state, where the second beam direction is the same as or different from the first beam direction.

Optionally, the indication message is a Medium Access Control-Control Element MAC-CE signaling, where indication information configured to activate the first TCI state is carried in the MAC-CE signaling; or, the indication message is a downlink control information DCI signaling configured to schedule transmission of the first object or activate the first object, where indication information of the first TCI state is carried in the DCI signaling.

Optionally, the receiving module 41 is further configured to receive a sixth indication message, where indication information indicating that the second beam direction is used as the first beam direction is carried in the sixth indication message, and the second beam direction is a direction indicated by a TCI state in a TCI state set configured in advance for the second object.

Optionally, the second object is PDCCH, and the first object is at least one of PDSCH, CSI-RS, PUCCH, PUSCH, or SRS; and the second beam direction is the beam direction used for a latest transmission of the second object.

Optionally, the sixth indication message is a DCI signaling configured to schedule transmission of the first object or a MAC-CE signaling configured to activate the first object.

Optionally, when the first object is a PDSCH, the sixth indication message is the DCI signaling;
when the first object is a CSI-RS, the sixth indication message is the DCI signaling or the MAC-CE signaling;
when the first object is PUCCH, the sixth indication message is the MAC-CE signaling;
when the first object is PUSCH, the sixth indication message is the DCI signaling; and
when the first object is an SRS, the sixth indication message is the DCI signaling or the MAC-CE signaling.

It should be noted that the apparatus in this embodiment is an apparatus corresponding to the method shown in FIG. 2 above, and the implementation methods in the above-mentioned embodiments are all applicable to that of this embodiment of the apparatus, and can also achieve the same technical effect. The above-mentioned apparatus provided by the embodiments of the present disclosure can realize all the method steps implemented by the above-mentioned method embodiments, and can achieve the same technical effect, and the same parts and beneficial effects in this embodiment as in the method embodiment will not be repeated in detail here.

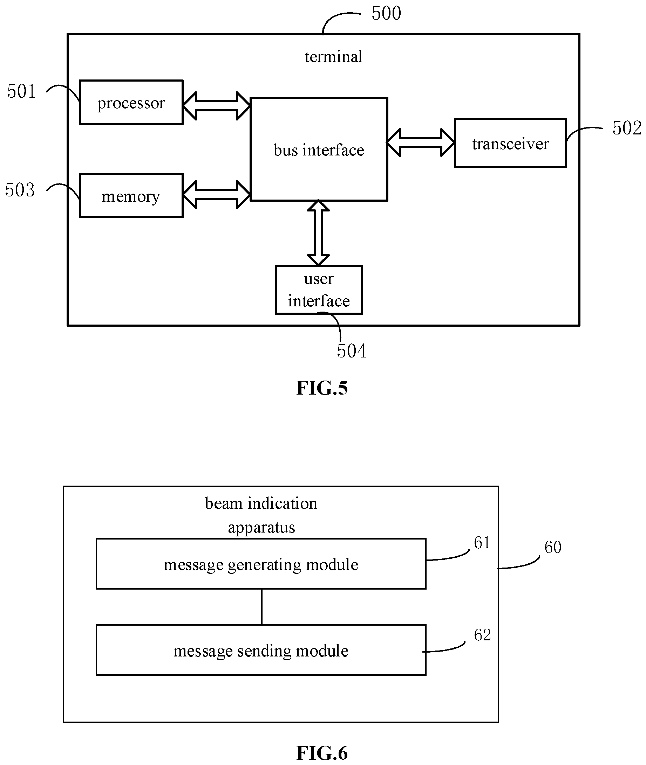

Refer to FIG. 5, the embodiments of the present disclosure provides a structural schematic view of a terminal, where the terminal 500 includes: a processor 501, a transceiver 502, a memory 503, a user interface 504, and a bus interface.

In the embodiments of the present disclosure, the terminal 500 further includes: a program stored in the memory 503 and executable on the processor 501.

When the processor 501 executes the program, the following steps are implemented:
receiving an indication message configured to indicate a first beam direction for transmitting a first object, where the first beam direction is the same as or different from a second beam direction used by the terminal for transmitting a second object, the first object and the second object are one of a channel and a reference signal; and
transmitting the first object according to the first beam direction.

Optionally, the processor 501 also implements the following steps when executing the program:
receiving a first indication message carrying a first TCI state, where the first TCI state in the first indication message is configured to indicate the first beam direction, and the first TCI state is a TCI state in the first TCI state set, where the first TCI state set is a TCI state set configured for the terminal in advance.

Optionally, the processor 501 also implements the following steps when executing the program:
receiving a second indication message carrying a second TCI state, where the second TCI state of the second indication message is configured to indicate a second beam direction for transmitting a second object;
transmitting the second object according to the second beam direction indicated by the second TCI state, where the second TCI state is a TCI state in the first TCI state set, and the first TCI state is the same as or different from the second TCI state.

Optionally, the processor 501 also implements the following steps when executing the program:
receiving a first configuration message, prior to the receiving the second indication message, and configure a second TCI state set of the terminal according to the first configuration message, where first quantity of TCI states are carried in the first configuration message;
receiving a second configuration message, and configuring the first TCI state set of the terminal according to the second configuration message, where the first TCI state set includes all or part of TCI states in the second TCI state set.

Optionally,
the first object is one of the physical uplink control channel PUCCH and the physical downlink control channel PDCCH, and the second object is the other one of the PUCCH and the PDCCH; when the processor 501 executes the program, it also implements the following steps: receiving a third indication message carrying a first TCI state, where the first TCI state in the third indication message is configured to simultaneously indicate the first beam direction and the second beam direction, and the first TCI state is a TCI state in a third TCI state set, where the third TCI state set is the same TCI state set configured for the first object and the second object.

Optionally, the processor 501 also implements the following steps when executing the program:
receiving a third configuration message, prior to the receiving the third indication message, and configuring the third TCI state set for the second object according to the third configuration message; and, receiving by the terminal a fourth configuration message, and configuring the third TCI state set for the first object according to the fourth configuration message;
   or,
receiving a fifth configuration message, and configuring the third TCI state set for the first object and the second object according to the fifth configuration message.

Optionally, the first object is the SRS, and the second object is the PUCCH; when the processor 501 executes the program, the following steps are also implemented:
receiving a fourth indication message carrying a first TCI state, where the first TCI state in the fourth indication message is configured to indicate the first beam direction, and the first TCI state is a TCI state in the fourth TCI state set configured for the first object, and the first beam direction indicated by the first TCI state is the same as or different from the second beam direction indicated by the second TCI state, and the second TCI state is a TCI state in the fifth TCI state set configured for the second object.

Optionally, the processor 501 also implements the following steps when executing the program:
receiving a fifth indication message carrying a second TCI state, where the second TCI state in the fifth indication message is configured to indicate the second beam direction for transmitting a second object; and
transmitting the second object, according to the second beam direction indicated by the second TCI state.

Optionally, the indication message is a Medium Access Control-Control Element MAC-CE signaling, where indication information configured to activate the first TCI state is carried in the MAC-CE signaling; or,
the indication message is a downlink control information DCI signaling configured to schedule transmission of the first object or activate the first object, where indication information of the first TCI state is carried in the DCI signaling.

Optionally, the processor 501 also implements the following steps when executing the program:
receiving a sixth indication message, where indication information indicating that second beam direction is used as the first beam direction is carried in the sixth indication message, and the second beam direction is a direction indicated by a TCI state in a TCI state set configured in advance for the second object.

Optionally, the second object is a PDCCH, and the first object is at least one of PDSCH, CSI-RS, PUCCH, PUSCH, or SRS;
the second beam direction is a beam direction used for a latest transmission of the second object.

Optionally, the sixth indication message is a DCI signaling configured to schedule transmission of the first object or a MAC-CE signaling configured to activate the first object.

Optionally, when the first object is a PDSCH, the sixth indication message is the DCI signaling;
when the first object is a CSI-RS, the sixth indication message is the DCI signaling or the MAC-CE signaling;
when the first object is PUCCH, the sixth indication message is the MAC-CE signaling;
when the first object is PUSCH, the sixth indication message is the DCI signaling; and
when the first object is an SRS, the sixth indication message is the DCI signaling or the MAC-CE signaling.

In FIG. 5, the bus architecture may include any number of interconnected buses and bridges, specifically one or more processors represented by processor 501 and various circuits of memory represented by memory 503 are linked together. The bus architecture can also link together various other circuits such as peripherals, voltage regulators, and power management circuits, which are all well known in the art and therefore will not be further described herein. The bus interface provides the interface. Transceiver 502 may be a plurality of elements, including a transmitter and a receiver, which provides elements for communicating with various other apparatuses over the transmission media. For different user devices, the user interface 504 may also be an interface capable of connecting externally and internally to required devices, and the connected devices include but are not limited to keypads, displays, speakers, microphones, and joysticks and the like.

The processor 501 is responsible for managing the bus architecture and general processing, and the memory 503 can store data used by the processor 501 when performing operations.

It should be noted that the terminal in this embodiment is a terminal corresponding to the method shown in FIG. 2 above, and the implementation method in each of the above embodiments is applicable to that of the embodiment of the terminal, and can also achieve the same technical effect. In the terminal, the transceiver 502 and the memory 503, as well as the transceiver 502 and the processor 501 can be communicated through the bus interface, the function of the processor 501 can also be realized by the transceiver 502, and the function of the transceiver 502 can also be realized by the processor 501. What needs to be explained here is that the above-mentioned terminal provided by the embodiments of the present disclosure can realize all the method steps implemented by the above-mentioned method embodiments, and can achieve the same technical effect. Parts and beneficial effects in this embodiment that are the same as those in the method embodiment will not be described in detail here.

In some embodiments of the present disclosure, a computer-readable storage medium is also provided, on which a program is stored, and when the program is executed by a processor, the following steps are implemented:
receiving an indication message configured to indicate a first beam direction for transmitting a first object, where the first beam direction is the same as or different from a second beam direction used by the terminal for transmitting a second object, the first object and the second object are one of a channel and a reference signal, and the first TCI state set is a TCI state set configured in advance for the terminal;
transmitting the first object, according to the first beam direction.

When the program is executed by the processor, it can realize all the implementation methods in the above-mentioned beam indication method applied to the terminal side, and can achieve the same technical effect. To avoid repetition, details are not repeated here.

The embodiments of the present disclosure provide a beam indication apparatus shown in FIG. 6, which can be applied to a network side device. Refer to FIG. 6, the beam indication apparatus 60 provided in the embodiments of the present disclosure includes:
a message generating module 61, configured to generate an indication message configured to indicate a first beam direction for transmitting a first object, where the first beam direction is the same as or different from a second beam direction used by the terminal for transmitting a second object, the first object and the second object are one of a channel and a reference signal, and the first TCI state set is a TCI state set configured for the terminal in advance; and
a message sending module 62, configured to send the indication message to the terminal.

Optionally, the message generating module 61 is further configured to: generate a first indication message carrying a first TCI state, where the first TCI state in the first indication message is configured to indicate the first beam direction, the first TCI state is a TCI state in a first TCI state set, and the first TCI state set is a TCI state set configured for the terminal in advance.

Optionally, the message sending module 62 is further configured to send a second indication message carrying a second TCI state prior to the sending the first indication message, where the second indication message is configured to indicate the second beam direction for transmitting the second object, wherein the second TCI state is a TCI state in the first TCI state set, and the first TCI state is the same as or different from the second TCI state.

Optionally, the message sending module 62 is further configured to send a first configuration message prior to the sending the second indication message, the first configuration message is configured to configure a second TCI state set for the terminal, and first quantity of TCI states are carried in the first configuration message; send a second configuration message, where the second configuration message is configured to configure the first TCI state set for the terminal, and the first TCI state set includes all or part of TCI states in the second TCI state set.

Optionally, the first object is one of the physical uplink control channel PUCCH and the physical downlink control channel PDCCH, and the second object is the other one of the PUCCH and the PDCCH; the message generating module 61 is further configured to generate a third indication message carrying a first TCI state, where the first TCI state in the third indication message is configured to simultaneously indicate the first beam direction and the second beam direction, and the first TCI state is a TCI state in the third TCI state set, the third TCI state set is the same TCI state set configured for the first object and the second object.

Optionally, the message sending module 62 is further configured to send a third configuration message to the terminal, where the third configuration message is configured to configure a third TCI state set for the second object, and a plurality of TCI states are carried in the third configuration message; and send a fourth configuration message to the terminal, where the fourth configuration message is configured to configure the third TCI state set for the first object; or, send a fifth configuration message to the terminal, where the fifth configuration message is configured to configure the third TCI state set for the first object and the second obj ect.

Optionally, the first object is the SRS, and the second object is the PUCCH; the message generating module 61 is further configured to generate a fourth indication message carrying the first TCI state, where the first TCI state in the fourth indication message is configured to indicate the first beam direction, and the first TCI state is a TCI state in the fourth TCI state set configured for the first object, and , the first beam direction indicated by the first TCI state is the same as or different from the second beam direction indicated by the second TCI state, and the second TCI state is a TCI state in the fifth TCI state set configured for the second obj ect.

Optionally, the message sending module 62 is further configured to send a fifth indication message carrying a second TCI state to the terminal, where the second TCI state in the fifth indication message is configured to indicate the second beam direction for transmitting the second object.

Optionally, the indication message is a Medium Access Control-Control Element MAC-CE signaling, where indication information configured to activate the first TCI state is carried in the MAC-CE signaling, or, the indication message is a downlink control information DCI signaling configured to schedule transmission of the first object or activate the first object, where indication information of the first TCI state is carried in the DCI signaling.

Optionally, the message generating module 61 is further configured to generate a sixth indication message carrying the second beam direction used as the first beam direction, the second beam direction is a direction indicated by a TCI state in a TCI state set configured in advance for the second object.

Optionally, the second object is PDCCH, and the first object is at least one of PDSCH, CSI-RS, PUCCH, PUSCH, or SRS; and the second beam direction is the beam direction used for a latest transmission of the second object.

Optionally, the indication message is a DCI signaling configured to schedule transmission of the first object or a MAC-CE signaling configured to activate the first object.

Optionally, when the first object is a PDSCH, the sixth indication message is the DCI signaling;
when the first object is a CSI-RS, the sixth indication message is the DCI signaling or the MAC-CE signaling;
when the first object is PUCCH, the sixth indication message is the MAC-CE signaling;
when the first object is PUSCH, the sixth indication message is the DCI signaling; and
when the first object is an SRS, the sixth indication message is the DCI signaling or the MAC-CE signaling.

It should be noted that the apparatus in this embodiment is an apparatus corresponding to the method shown in FIG. 3 above, and the implementation methods in the above-mentioned embodiments are all applicable to that of the embodiment of the apparatus, and can also achieve the same technical effect. What needs to be explained here is that, the above-mentioned apparatus provided by the embodiments of the present disclosure can realize all the method steps implemented by the above-mentioned method embodiments, and can achieve the same technical effect, and the same parts and beneficial effects in this embodiment as in the method embodiment will not be repeated in detail here.

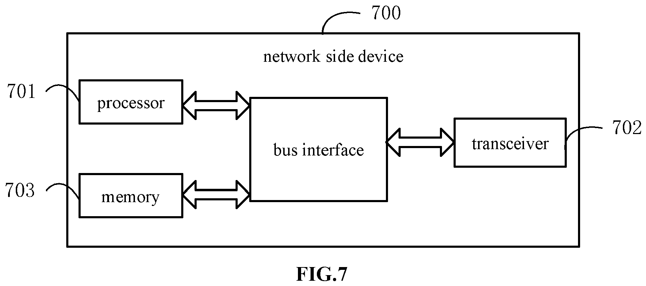

Refer to FIG. 7, the embodiments of the present disclosure provides a structural schematic view of a network side device 700, including: a processor 701, a transceiver 702, a memory 703, and a bus interface,
in the embodiments of the present disclosure, the network side device 700 further includes: a program stored in the memory 703 and executable on the processor 701, when the processor 701 executes the program, the following steps are implemented:
generating an indication message configured to indicate a first beam direction for transmitting a first object, where the first beam direction is the same as or different from a second beam direction used by a terminal for transmitting a second object, the first object and the second object are one of a channel and a reference signal, and the first beam direction is a direction indicated by a TCI state in a preconfigured TCI state set; and
sending the indication message to the terminal.

Optionally, when the program is executed by the processor 701, the following steps are also implemented:
generating a first indication message carrying a first TCI state, where the first TCI state in the first indication message is configured to indicate the first beam direction, and the first TCI state is a TCI state in the first TCI state set, where the first TCI state set is a TCI state set configured for the terminal in advance.

Optionally, when the program is executed by the processor 701, the following steps are also implemented:
sending a second indication message carrying a second TCI state, where the second indication message is configured to indicate a second beam direction for transmitting a second object, where the second TCI state is a TCI state in the first TCI state set, and the first TCI state is the same as or different from the second TCI state.

Optionally, when the program is executed by the processor 701, the following steps are also implemented:
sending a first configuration message, prior to the sending the second indication message, where the first configuration message is configured to configure a second TCI state set for the terminal, and first quantity of TCI states are carried in the first configuration message;
sending a second configuration message, where the second configuration message is configured to configure the first TCI state set for the terminal, and the first TCI state set includes all or part of TCI states in the second TCI state set.

Optionally, the first object is one of the physical uplink control channel PUCCH and the physical downlink control channel PDCCH, and the second object is the other one of the PUCCH and the PDCCH; when the program is executed by the processor 701, the following steps are also implemented:
generating a third indication message carrying a first TCI state, where the first TCI state in the third indication message is configured to simultaneously indicate the first beam direction and the second beam direction, and the first TCI state is a TCI state in a third TCI state set, where the third TCI state set is the same TCI state set configured for the first object and the second object.

Optionally, when the program is executed by the processor 701, the following steps are also implemented:
sending a third configuration message to the terminal, where the third configuration message is configured to configure a third TCI state set for the second object, where a plurality of TCI states are carried in the third configuration message; and, sending the fourth configuration message to the terminal, where the fourth configuration message is configured to configure the third TCI state set for the first object;
   or,
sending a fifth configuration message to the terminal, where the fifth configuration message is configured to configure the third TCI state set for the first object and the second obj ect.

Optionally, the first object is the SRS, and the second object is the PUCCH; when the program is executed by the processor 701, the following steps are also implemented:
generating a fourth indication message carrying the first TCI state, where the first TCI state in the fourth indication message is configured to indicate the first beam direction, the first TCI state is a TCI state in the fourth TCI state set configured for the first object, and the first beam direction indicated by the first TCI state is the same as or different from the second beam direction indicated by the second TCI state, and the second TCI state is a TCI state in the fifth TCI state set configured for the second object.

Optionally, when the program is executed by the processor 701, the following steps are also implemented:
sending a fifth indication message carrying the second TCI state to the terminal, where the second TCI state in the fifth indication message is configured to indicate the second beam direction for transmitting the second object.

Optionally, the indication message is a Medium Access Control-Control Element MAC-CE signaling, where indication information configured to activate the first TCI state is carried in the MAC-CE signaling; or, the indication message is a downlink control information DCI signaling configured to schedule transmission of the first object or activate the first object, where indication information of the first TCI state is carried in the DCI signaling.

Optionally, when the program is executed by the processor 701, the following steps are also implemented:
generating a sixth indication message carrying the second beam direction used as the first beam direction, where the second beam direction is a direction indicated by a TCI state in a TCI state set configured in advance for the second object.

Optionally, the second object is PDCCH, and the first object is at least one of PDSCH, CSI-RS, PUCCH, PUSCH, or SRS; the second beam direction is a beam direction used for a latest transmission of the second object.

Optionally, the sixth indication message is a DCI signaling configured to schedule the transmission of the first object or a MAC-CE signaling configured to activate the first object.

Optionally, when the first object is a PDSCH, the sixth indication message is the DCI signaling;
when the first object is a CSI-RS, the sixth indication message is the DCI signaling or the MAC-CE signaling;
when the first object is PUCCH, the sixth indication message is the MAC-CE signaling;
when the first object is PUSCH, the sixth indication message is the DCI signaling; and
when the first object is SRS, the sixth indication message is the DCI signaling or the MAC-CE signaling.

In FIG. 7, the bus architecture may include any number of interconnected buses and bridges, specifically one or more processors represented by processor 701 and various circuits of memory represented by memory 703 are linked together. The bus architecture can also link together various other circuits such as peripherals, voltage regulators, and power management circuits, which are all well known in the art and therefore will not be further described herein. The bus interface provides the interface. Transceiver 702 may be a plurality of elements, including a transmitter and a receiver, which provides elements for communicating with various other apparatuses over the transmission media.

The processor 701 is responsible for managing the bus architecture and general processing, and the memory 703 can store data used by the processor 701 when performing operations.

It should be noted that the terminal in this embodiment is a terminal corresponding to the method shown in FIG. 3 above, and the implementation method in each of the above embodiments is applicable to that of the embodiment of the terminal, and can also achieve the same technical effect. In the terminal, the transceiver 702 and the memory 703, as well as the transceiver 702 and the processor 701 can be communicated through the bus interface, the function of the processor 701 can also be realized by the transceiver 702, and the function of the transceiver 702 can also be realized by the processor 701. What needs to be explained here is that the above-mentioned terminal provided by the embodiments of the present disclosure can realize all the method steps implemented by the above-mentioned method embodiments, and can achieve the same technical effect. Parts and beneficial effects in this embodiment that are the same as those in the method embodiment will not be described in detail here.

In some embodiments of the present disclosure, a computer-readable storage medium is also provided, on which a program is stored, and when the program is executed by a processor, the following steps are implemented:
generating an indication message configured to indicate a first beam direction for transmitting a first object, where the first beam direction is the same as or different from a second beam direction used by the terminal for transmitting a second object, the first object and the second object are one of a channel and a reference signal, and the first TCI state set is a TCI state set configured in advance for the terminal; and
sending the indication message to the terminal.

When the program is executed by the processor, it can realize all the implementation methods in the above-mentioned beam indication method applied to the network side device, and can achieve the same technical effect. To avoid repetition, details are not repeated here.

Those ordinarily skilled in the art can appreciate that the units and algorithm steps of the respective examples described in conjunction with the embodiments disclosed herein can be implemented by electronic hardware, or a combination of computer software and electronic hardware. Whether these functions are executed by hardware or software depends on the specific application and design constraints of the technical solution. Those skilled in the art may use different methods to implement the described functions for each specific application, but such implementation should not be regarded as exceeding the scope of the present disclosure. For hardware implementation, modules, units, sub-modules, sub-units, etc. can be implemented in one or more application specific integrated circuits (Application Specific Integrated Circuits, ASIC), digital signal processor (Digital Signal Processing, DSP), digital signal processing device ( DSP Device, DSPD), Programmable Logic Device (Programmable Logic Device, PLD), Field-Programmable Gate Array (Field-Programmable Gate Array, FPGA), general-purpose processor, controller, microcontroller, microprocessor, and other electronic units or combinations thereof configured to perform the functions described in the present disclosure.

Those skilled in the art can clearly understand that for the convenience and brevity of the description, the specific working process of the above-described system, apparatus and unit can refer to the corresponding process in the foregoing method embodiments, which will not be repeated here.

In the embodiments provided in the present disclosure, it should be understood that the disclosed apparatuses and methods may be implemented in other ways. For example, the apparatus embodiments described above are only illustrative. For example, the division of the units is only a logical function division. In actual implementation, there may be other division methods. For example, multiple units or components can be combined or may be integrated into another system, or some features may be ignored, or not implemented. In another point, the mutual coupling or direct coupling or communication connection shown or discussed may be achieved through some interfaces, and the indirect coupling or communication connection of apparatuses or units may be in electrical, mechanical or other forms.

The units described as separate components may or may not be physically separated, and the components shown as units may or may not be physical units, that is, they may be located in one place, or may be distributed to multiple network units. Part or all of the units can be selected according to actual needs to achieve the purpose of the solution of the embodiment of the present disclosure.

In addition, each functional unit in each embodiment of the present disclosure may be integrated into one processing unit, each unit may exist separately physically, or two or more units may be integrated into one unit.

If the functions described above are realized in the form of software function units and sold or used as independent products, they can be stored in a computer-readable storage medium. Based on this understanding, the essence of the technical solution of the present application or the part that contributes to the related technology or the part of the technical solution can be embodied in the form of a software product. The computer software product is stored in a storage medium, which includes several instructions that are used to enable a computer device (which may be a personal computer, a server, or a network device, etc.) to execute all or part of the steps of the methods described in the various embodiments of the present disclosure. The aforementioned storage medium includes: various media capable of storing program codes such as U disk, mobile hard disk, ROM, RAM, magnetic disk or optical disk.

The above is only a specific embodiment of the present disclosure, but the scope of the present disclosure is not limited thereto, anyone familiar with the technical field can easily think of changes or substitutions within the technical scope disclosed in the present disclosure, should be covered within the scope of the present disclosure. Therefore, the scope of the present disclosure should be based on the scope of the claims.

## Claims

1. A beam indication method, applied to a terminal, comprising:
receiving by the terminal an indication message configured to indicate a first beam direction for transmitting a first object, wherein the first beam direction is the same as or different from a second beam direction used by the terminal for transmitting a second object, the first object and the second object are one of a channel and a reference signal, and the first beam direction is a direction indicated by a TCI state in a preconfigured TCI state set; and
transmitting by the terminal the first object according to the first beam direction.

2. The method according to claim 1, wherein the receiving the indication message configured to indicate the first beam direction for transmitting the first object comprises:
receiving by the terminal a first indication message carrying a first TCI state, wherein the first TCI state in the first indication message is configured to indicate the first beam direction, and the first TCI state is a TCI state in the first TCI state set, wherein the first TCI state set is a TCI state set configured for the terminal in advance.

3. The method according to claim 2, wherein prior to the receiving the first indication message, the method further comprises:
receiving by the terminal a second indication message carrying a second TCI state, wherein the second TCI state of the second indication message is configured to indicate a second beam direction for transmitting the second object; and
transmitting by the terminal the second object according to the second beam direction indicated by the second TCI state, wherein the second TCI state is a TCI state in the first TCI state set, and , the first TCI state is the same as or different from the second TCI state.

4. The method according to claim 3, wherein
prior to the receiving the second indication message, the method further comprises:
receiving by the terminal a first configuration message, and configuring a second TCI state set of the terminal according to the first configuration message, wherein first quantity of TCI states are carried in the first configuration message; and
receiving by the terminal a second configuration message, and configuring the first TCI state set of the terminal according to the second configuration message, wherein the first TCI state set comprises all or part of TCI states in the second TCI state set.

5. The method according to claim 1, wherein the first object is one of a physical uplink control channel (PUCCH) and a physical downlink control channel (PDCCH), and the second object is the other one of the PUCCH and the PDCCH;
the receiving the indication message configured to indicate the first beam direction for transmitting the first object comprises:
receiving by the terminal a third indication message carrying a first TCI state, wherein the first TCI state in the third indication message is configured to simultaneously indicate the first beam direction and the second beam direction, and the first TCI state is a TCI state in a third TCI state set, and the third TCI state set is a same TCI state set configured for the first object and the second object.

6. The method according to claim 5, wherein prior to the receiving the third indication message, the method further comprises:
receiving by the terminal a third configuration message, and configuring the third TCI state set for the second object according to the third configuration message; and, receiving by the terminal a fourth configuration message, and configuring the third TCI state set for the first object according to the fourth configuration message;
or,
receiving by the terminal a fifth configuration message, and configuring the third TCI state set for the first object and the second object according to the fifth configuration message.

7. The method according to claim 1, wherein the first object is an SRS, and the second object is a PUCCH;
the receiving the indication message configured to indicate the first beam direction for transmitting the first object comprises:
receiving by the terminal a fourth indication message carrying a first TCI state, wherein the first TCI state in the fourth indication message is configured to indicate the first beam direction, the first TCI state is a TCI state in the fourth TCI state set configured for the first object, and the first beam direction indicated by the first TCI state is the same as or different from the second beam direction indicated by the second TCI state, and the second TCI state is a TCI state in a fifth TCI state set configured for the second object.

8. The method according to claim 7, further comprising:
receiving by the terminal a fifth indication message carrying the second TCI state, wherein the second TCI state in the fifth indication message is configured to indicate the second beam direction for transmitting the second object; and
transmitting by the terminal the second object according to the second beam direction indicated by the second TCI state.

9. The method according to any one of claims 2 to 8, wherein the indication message is a Medium Access Control-Control Element (MAC-CE) signaling, wherein indication information configured to activate the first TCI state is carried in the MAC-CE signaling; or,
the indication message is a downlink control information (DCI) signaling configured to schedule a transmission of the first object or activate the first object, wherein the indication information of the first TCI state is carried in the DCI signaling.

10. The method according to claim 1, wherein the receiving the indication message configured to indicate the first beam direction for transmitting the first object comprises:
receiving by the terminal a sixth indication message, wherein indication information indicating that the second beam direction is used as the first beam direction is carried in the sixth indication message, and the second beam direction is a direction indicated by a TCI state in a TCI state set configured in advance for the second object.

11. The method according to claim 10, wherein the second object is PDCCH, and the first object is at least one of PDSCH, CSI-RS, PUCCH, PUSCH or SRS; and
the second beam direction is a beam direction used for a latest transmission of the second obj ect.

12. The method according to claim 10, wherein the sixth indication message is a DCI signaling configured to schedule a transmission of the first object or an MAC-CE signaling configured to activate the first object.

13. The method according to claim 12, wherein
in a case that the first object is the PDSCH, the sixth indication message is the DCI signaling;
in a case that the first object is the CSI-RS, the sixth indication message is the DCI signaling or the MAC-CE signaling;
in a case that the first object is the PUCCH, the sixth indication message is the MAC-CE signaling;
in a case that the first object is the PUSCH, the sixth indication message is the DCI signaling; and
in a case that the first object is the SRS, the sixth indication message is the DCI signaling or the MAC-CE signaling.

14. A beam indication method, applied to a network side device, comprising:
generating an indication message configured to indicate a first beam direction for transmitting a first object, wherein the first beam direction is the same as or different from a second beam direction used by a terminal for transmitting a second object, the first object and the second object are one of a channel and a reference signal, and the first beam direction is a direction indicated by a TCI state in a preconfigured TCI state set; and
sending the indication message to the terminal.

15. The method according to claim 14, wherein the generating the indication message comprises:
generating a first indication message carrying a first TCI state, wherein the first TCI state in the first indication message is configured to indicate the first beam direction, and the first TCI state is a TCI state in the first TCI state set, wherein the first TCI state set is a TCI state set configured for the terminal in advance.

16. The method according to claim 15, wherein prior to the sending the first indication message, the method further comprises:
sending a second indication message carrying a second TCI state, wherein the second indication message is configured to indicate a second beam direction for transmitting the second object, wherein the second TCI state is a TCI state in the first TCI state set, and the first TCI state is the same as or different from the second TCI state.

17. The method according to claim 16, wherein
prior to the sending the second indication message, the method further comprises:
sending a first configuration message, wherein the first configuration message is configured to configure a second TCI state set for the terminal, and first quantity of TCI states are carried in the first configuration message; and
sending a second configuration message, wherein the second configuration message is configured to configure the first TCI state set for the terminal, and the first TCI state set comprises all or part of TCI states in the second TCI state set.

18. The method according to claim 14, wherein the first object is one of a physical uplink control channel (PUCCH) and a physical downlink control channel (PDCCH), and the second object is the other one of the PUCCH and the PDCCH;
the generating the indication message comprises:
generating a third indication message carrying a first TCI state, wherein the first TCI state in the third indication message is configured to simultaneously indicate the first beam direction and the second beam direction, and the first TCI state is a TCI state in a third TCI state set, and the third TCI state set is a same TCI state set configured for the first object and the second obj ect.

19. The method according to claim 18, comprising:
sending a third configuration message to the terminal, wherein the third configuration message is configured to configure a third TCI state set for the second object, a plurality of TCI states are carried in the third configuration message; and, sending a fourth configuration message to the terminal, wherein the fourth configuration message is configured to configure the third TCI state set for the first object;
or,
sending a fifth configuration message to the terminal, wherein the fifth configuration message is configured to configure the third TCI state set for the first object and the second obj ect.

20. The method according to claim 14, wherein the first object is an SRS, and the second object is a PUCCH;
the generating the indication message comprises:
generating a fourth indication message carrying a first TCI state, wherein the first TCI state in the fourth indication message is configured to indicate the first beam direction, the first TCI state is a TCI state in the fourth TCI state set configured for the first object, and the first beam direction indicated by the first TCI state is the same as or different from the second beam direction indicated by the second TCI state, and the second TCI state is a TCI state in a fifth TCI state set configured for the second object.

21. The method according to claim 20, further comprising:
sending a fifth indication message carrying the second TCI state to the terminal, wherein the second TCI state in the fifth indication message is configured to indicate the second beam direction for transmitting the second object.

22. The method according to any one of claims 15 to 21, wherein the indication message is a Medium Access Control-Control Element (MAC-CE) signaling, wherein indication information configured to activate the first TCI state is carried in the MAC-CE signaling; or,
the indication message is a downlink control information (DCI) signaling configured to schedule transmission of the first object or activate the first object, wherein the indication information of the first TCI state is carried in the DCI signaling.

23. The method according to claim 14, wherein the generating the indication message comprises:
generating a sixth indication message carrying the second beam direction used as the first beam direction, and the second beam direction is a direction indicated by a TCI state in a TCI state set configured in advance for the second object.

24. The method according to claim 23, wherein the second object is PDCCH, and the first object is at least one of PDSCH, CSI-RS, PUCCH, PUSCH or SRS; and
the second beam direction is a beam direction used for a latest transmission of the second obj ect.

25. The method according to claim 23, wherein the sixth indication message is a DCI signaling configured to schedule transmission of the first object or a MAC-CE signaling configured to activate the first object.

26. The method according to claim 25, wherein
in a case that the first object is the PDSCH, the sixth indication message is the DCI signaling;
in a case that the first object is the CSI-RS, the sixth indication message is the DCI signaling or the MAC-CE signaling;
in a case that the first object is the PUCCH, the sixth indication message is the MAC-CE signaling;
in a case that the first object is the PUSCH, the sixth indication message is the DCI signaling; and
in a case that the first object is the SRS, the sixth indication message is the DCI signaling or the MAC-CE signaling.

27. A beam indication apparatus, applied to a terminal, comprising:
a receiving module, configured to receive an indication message configured to indicate a first beam direction for transmitting a first object, wherein the first beam direction is the same as or different from a second beam direction used by the terminal for transmitting a second object, the first object and the second object are one of a channel and a reference signal, and the first beam direction is a direction indicated by a TCI state in a preconfigured TCI state set; and
a transmission control module, configured to transmit the first object according to the first beam direction.

28. A terminal, comprising: a memory, a processor, a transceiver, and a program stored in the memory and executable on the processor;
when the processor executes the program to perform:
receiving an indication message configured to indicate a first beam direction for transmitting a first object, wherein the first beam direction is the same as or different from a second beam direction used by the terminal for transmitting a second object, the first object and the second object are one of a channel and a reference signal, and the first beam direction is a direction indicated by a TCI state in a preconfigured TCI state set; and
transmitting the first object according to the first beam direction.

29. A beam indication apparatus, applied to a network side device, comprising:
a message generating module, configured to generate an indication message configured to indicate a first beam direction for transmitting a first object, wherein the first beam direction is the same as or different from a second beam direction used by the terminal for transmitting a second object, the first object and the second object are one of a channel and a reference signal, and the first beam direction is a direction indicated by a TCI state in a preconfigured TCI state set; and
a message sending module, configured to send the indication message to the terminal.

30. A network side device, comprising: a memory, a processor, a transceiver, and a program stored in the memory and executable on the processor;
when the processor executes the program to perform:
generating an indication message configured to indicate a first beam direction for transmitting a first object, wherein the first beam direction is the same as or different from a second beam direction used by the terminal for transmitting a second object, the first object and the second object are one of a channel and a reference signal, and the first beam direction is a direction indicated by a TCI state in a preconfigured TCI state set; and
sending the indication message to the terminal.

31. A computer storage medium, comprising instructions, wherein when the instructions are run in a computer, the computer is enabled to perform the method according to any one of claims 1 to 26.

32. A computer program product, wherein the program product is executed by at least one processor to implement the method according to any one of claims 1-26.

33. A terminal, wherein the terminal is configured to perform the method according to any one of claims 1-13.

34. A network side device, wherein the network side device is configured to perform the method according to any one of claims 14-26.
